# FASCICULE DE BREVET EUROPEEN

(11) **EP 0 756 814 B1**
(45) Date de publication et mention de la délivrance du brevet: **06.12.2000**
(21) Numéro de dépôt: 96420263.4
(22) Date de dépôt: 01.08.1996
(51) Int. Cl.: A01D 57/01

(54) **Carter de débrousailleuse**
Buschmähergehäuse
Brushmower housing

(30) Priorité: 02.08.1995 FR 9509628
(43) Date de publication de la demande: 05.02.1997
(73) Titulaire: Etablissements Daloz, 39000 Lons le Saunier (FR)
(72) Inventeur: Daloz, Jacques, 39000 Lons le Saunier (FR)
(74) Mandataire: Perrier, Jean-Pierre

(56) Documents cités:
- FR-A- 1 546 690
- FR-A- 2 417 930
- FR-A- 2 509 568
- FR-A- 2 685 993
- US-A- 2 502 696
- US-A- 2 872 770
- US-A- 3 496 707
- US-A- 4 466 235
- US-A- 4 909 024

## Description

L'invention est relative aux débroussailleuses comportant des moyens de coupe rotatifs, composés d'une lame ou d'un disque équipé de couteaux, ces moyens étant calés à l'extrémité d'un arbre moteur vertical et décrivant une trajectoire horizontale sous un carter protecteur.

Ces machines, qui sont destinées à couper des végétaux de toute nature, de toute taille et ayant des tiges de dimensions variables, sont en général dotées d'un carter ouvert vers l'avant. Que le carter soit de type traîneau ou cylindrique à axe vertical coaxial à l'axe de rotation des moyens de coupe, il comporte, sur sa partie avant, une ouverture rectangulaire permettant aux moyens de coupe de sectionner la base des tiges des végétaux.

En fonctionnement, et en raison de la présence des parois latérales du carter, les végétaux coupés n'ont pas d'autre possibilité que de s'évacuer en passant sur les bords latéraux, ce qui provoque plus ou moins rapidement des bourrages pouvant bloquer les moyens de coupe et en tous cas, perturbant leur fonction.

On connaît par US-A-2872770 et par FR-A-2685993 des dispositifs de débroussaillage comportant, une paroi antérieure déflectrice qui, disposée au dessus de la trajectoire des moyens de coupe, va en s'élevant vers l'avant et vers le haut en allant d'un point bas, disposé dans la zone d'action des moyens de coupe, jusqu'à un point haut, disposé en avant de cette trajectoire.

De telles parois courbent les végétaux vers l'avant, avant leur sectionnement, mais n'éliminent pas les bourrages.

La présente invention a pour but de fournir un carter qui remédie à ces inconvénients et améliore, non seulement, le sectionnement des végétaux mais aussi leur extraction hors du carter.

A cet effet, dans le carter selon l'invention, la paroi déflectrice est constituée par un bandeau semi-circulaire, tronconique et divergeant vers le haut, qui fixé sur la partie avant du carter, s'étend, dans le sens de rotation des moyens de coupe, depuis un point disposé en avant du plan médian transversal du carter jusqu'à l'orifice d'éjection latérale.

Grâce à cet agencement, lors de l'avancement de la débroussailleuse, la partie supérieure de son bandeau tronconique, s'étendant au-dessus de la trajectoire circulaire des moyens de coupe, non seulement favorise la coupe des tiges des végétaux en les courbant vers l'avant, mais aussi, par sa forme semi-circulaire tronconique et grâce à l'énergie communiquée aux tiges par les moyens de coupe, dévie ces tiges latéralement en évitant ainsi qu'elles s'accumulent sous le carter et provoquent des bourrages..

Avantageusement, le bandeau avant est prolongé, vers l'arrière et au-dessus d'un orifice d'éjection ménagé sur l'un des côtés du carter, par un déflecteur pentu allant en s'élevant depuis le carter vers l'extérieur.

Ainsi, les tiges des végétaux coupés, longeant le bandeau avant sous la poussée des moyens de coupe, sont amenées par ces moyens contre le déflecteur qui, en exerçant sur eux, une pression à un niveau plus élevé par rapport au sol, les obligent à se coucher latéralement vers l'extérieur et évitent ainsi tout phénomène de bourrage.

D'autres caractéristiques et avantages ressortiront de la description qui suit en référence au dessin schématique annexé représentant, à titre d'exemple, une forme d'exécution d'une débroussailleuse équipée du carter selon l'invention.
Figure 1 est une vue en perspective par l'avant d'une telle débroussailleuse,
Figure 2 est une vue de face en élévation du carter,
Figure 3 est une vue en coupe suivant III-III de figure 2,
Figure 4 est une vue en plan par dessus de ce carter.

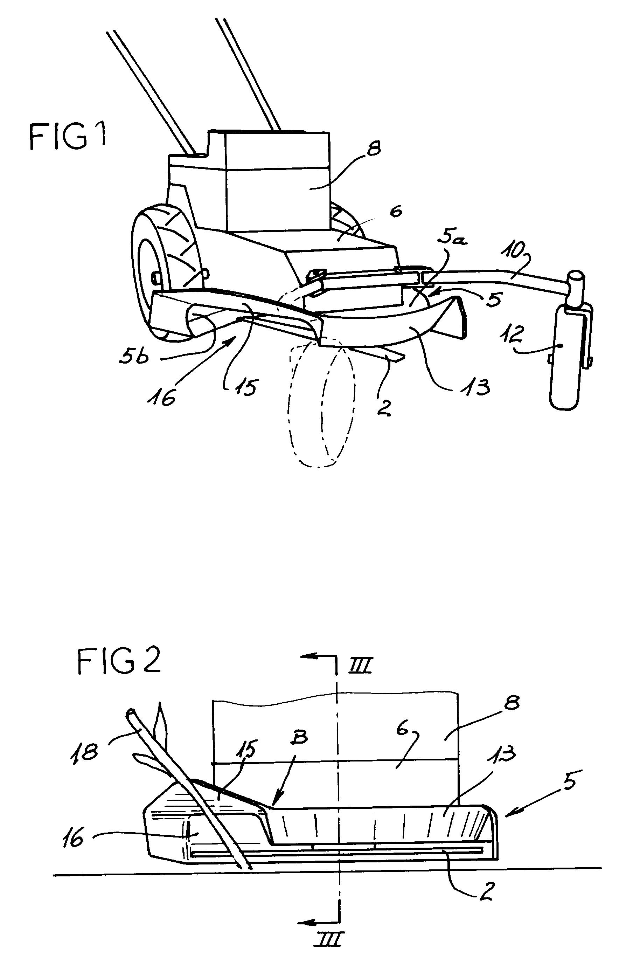

Dans la forme d'exécution représentée, la débroussailleuse est dotée de moyens de coupe comprenant une lame 2, calée en son milieu sur un arbre moteur 3 monté libre en rotation dans un palier 4, solidaire d'un carter 5 porté par un châssis 6. L'arbre moteur est entraîné, par exemple par une transmission par courroie 7, par un groupe moteur assurant également l'entraînement de deux roues motrices arrières 9. Sur l'avant, le châssis est équipé, comme montré à la figure 1, d'au moins un et éventuellement de deux bras 10, porteurs d'une roue folle 12.

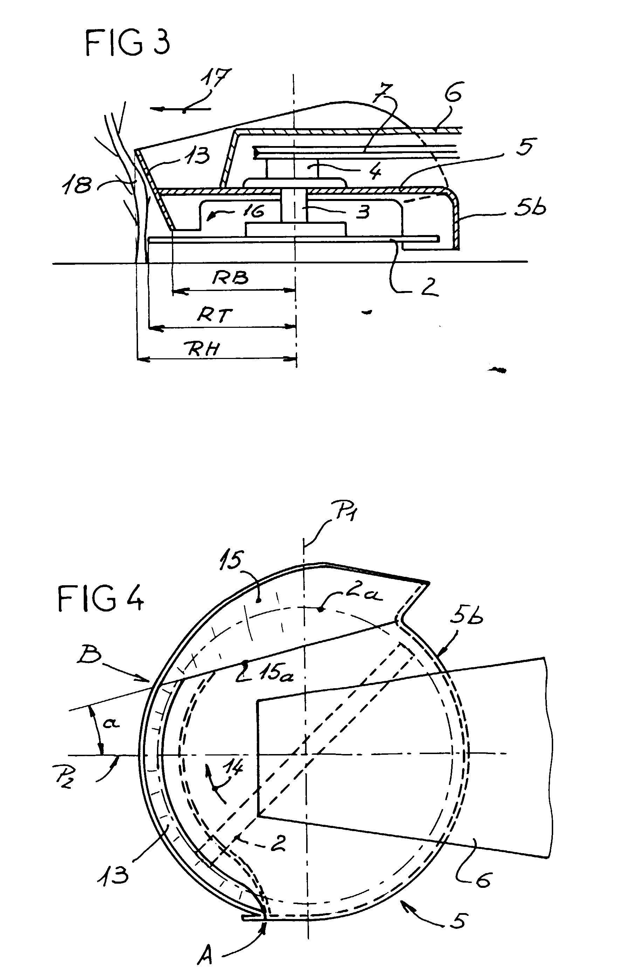

Comme le montre la figure 4, le carter 5 est du type cylindrique à axe vertical et comporte donc une paroi supérieure plane et horizontale 5a et une paroi cylindrique 5b. La figure 3 montre que la paroi 5b est moins haute sur l'avant de l'appareil, puisqu'elle vient au-dessus de la trajectoire de la lame 2.

Selon l'invention, le carter 5 comporte, dans sa partie avant, un bandeau semi-circulaire et tronconique 13 qui va en divergeant vers le haut. Ce bandeau semi circulaire ne s'étend que sur une partie de la périphérie du carter et, plus précisément, et dans le sens de rotation des moyens de coupe, représentée par la flèche 14 à la figurer 4, depuis un point A, disposé en avant du plan médian transversal P1 du carter 5, jusqu'à un point B, disposé au-delà du plan médian longitudinal P2 du carter et constituent le début de l'orifice 16 d'éjection latérale. Ce bandeau est sensiblement coaxial à l'axe de rotation de la lame 2.

Comme le montre la figure 3, le rayon RB du bord inférieur du bandeau 13 est plus petit que le rayon RT de la trajectoire circulaire de la lame 2, tandis que le bord supérieur de ce bandeau a un rayon RH qui est plus grand que celui RT précité.

Indépendamment des avantages exposés plus loin, ce bandeau protège les moyens de coupe contre tous contacts avec des corps verticaux non flexibles et, en particulier, avec les arbres.

Ce bandeau 13 se prolonge vers l'arrière par un déflecteur pentu 15, qui disposé au-dessus de l'orifice d'éjection 16, va en s'élevant depuis le carter vers l'extérieur.

La figure 4 montre que le bord longitudinal interne 15a du déflecteur 15 se raccorde à la paroi supérieure 5a du carter par une ligne droite qui sécante la trajectoire circulaire 2a de la lame 2 et qui s'étend de part et d'autre du plan médian transversal P1. De plus, cette intersection 15a forme, avec l'axe longitudinal de la débroussailleuse, matérialisé à la figure 4 par la trace du plan P2, un angle a qui est aigu et qui va en divergeant vers l'arrière.

Grâce à cet agencement, lorsque la débroussailleuse est déplacée dans le sens de la flèche 17 de figure 3, et comme montré pour la tige 18 d'un végétal, son bandeau tronconique 13 vient en contact avec la tige 18 avant que la lame 2 ne le sectionne. Cela permet d'obtenir une meilleure coupe et d'utiliser ce contact avec le bandeau pour dévier la tige sectionnée vers le côté, en profitant de l'énergie qui lui est communiquée par la lame de coupe 2. Lorsque la tige arrive au point B, le guidage, assuré par le bandeau, est remplacé sans transition par celui assuré par le déflecteur 15 qui, venant en contact avec elle de plus en plus haut, peut plus aisément la coucher sur le côté et hors de la trajectoire de déplacement de la débroussailleuse. Grâce à cela, les végétaux sectionnés n'ont pas tendance à s'engager dans le carter 5, avec le risque de provoquer des bourrages.

Il ressort de ce qui précède que, par des aménagements simples du carter, l'invention améliore considérablement les conditions de coupe et les conditions d'éjection des végétaux, ce qui procure de meilleures conditions de travail et un meilleur rendement.

## Revendications

1. Carter de débroussailleuse pour des moyens de coupe (2) rotatifs dans un plan horizontal et disposés sous lui, ce carter comportant un orifice d'éjection latérale (16) et une paroi antérieure déflectrice qui, ayant un bord inférieur disposé au dessus de la trajectoire circulaire des moyens de coupe (2) va en s'élevant vers le haut et l'avant pour courber les végétaux avant leur sectionnement par les moyens de coupe **caractérisé en ce que** la paroi déflectrice est constituée par le bandeau (13) semi-circulaire, tronconique et divergeant vers le haut, fixé sur la partie avant du carter (5) et s'étendant, dans le sens de rotation des moyens de coupe, depuis un point (A) disposé en avant du plan médian transversal de ce carter jusqu'à un point (B) disposé au delà du plan longitudinal (P2) du carter devant l'orifice d'éjection (16), de manière à dévier sur le côté chaque tige sectionnée, en profitant de l'énergie communiquée à cette tige par les moyens de coupe.

2. Carter selon la revendication 1, **caractérisé en ce que** le bandeau avant (13) est prolongé, vers l'arrière et au-dessus de l'orifice d'éjection (16), par un déflecteur pentu (15), allant en s'élevant depuis le carter vers l'extérieur.

3. Carter selon la revendication 2, **caractérisé en ce que** le bord longitudinal intérieur (15a) du déflecteur (15) se raccorde à la paroi supérieure (5a) du carter (5) par une ligne droite, qui, sécantant la trajectoire correspondante des moyens de coupe (2) et s'étendant de part et d'autre du plan médian transversal du carter, forme, avec l'axe longitudinal de la débroussailleuse, un angle aigu a convergeant vers l'avant.

## Patentansprüche

1. Buschmähergehäuse für Schneidemittel (2), die in einer horizontalen Ebene drehbar und unter ihm angeordnet sind, wobei dieses Gehäuse eine seitliche Auswurföffnung (16) und eine vordere Ablenkwand umfaßt, die einen über der Kreisbahn der Schneidemittel (2) angeordneten unteren Rand aufweist und nach oben und nach vorne aufsteigend verläuft, um die Pflanzen vor ihrem Abschneiden durch die Schneidemittel zu biegen, **dadurch gekennzeichnet**, daß die Ablenkwand durch ein halbkreisförmiges, kegelstumpfartiges und nach oben divergierendes Band (13) gebildet ist, das am Vorderbereich des Gehäuses (5) befestigt ist und sich in der Drehrichtung der Schneidemittel von einem vor der Quermittelebene dieses Gehäuses angeordneten Punkt (A) bis zu einem jenseits der Längsebene (P2) des Gehäuses vor der Auswurföffnung (16) angeordneten Punkt (B) derart erstreckt, daß es jeden abgeschnittenen Stiel unter Ausnutzung der diesem Stiel durch die Schneidemittel verliehenen Energie zur Seite ablenkt.

2. Gehäuse nach Anspruch 1, **dadurch gekennzeichnet**, daß das vordere Band (13) nach hinten und über die Auswurföffnung (16) hinaus durch ein schräges Ablenkelement (15) verlängert ist, das vom Gehäuse nach außen ansteigend verläuft.

3. Gehäuse nach Anspruch 2, **dadurch gekennzeichnet**, daß der innere Längsrand (15a) des Ablenkelements (15) mit der oberen Wand (5a) des Gehäuses (5) in einer geraden Linie verbunden ist, die die entsprechende Bahn der Schneidemittel (2) schneidet, sich auf beiden Seiten der Quermittelebene des Gehäuses erstreckt und mit der Längsachse des Buschmähers einen nach vorne konvergierenden spitzen Winkel (a) bildet.

## Claims

1. Plant-cutting machine housing for cutting means (2) which rotate in a horizontal plane and are disposed below it, this housing comprising a lateral ejection opening (16) and a front deflecting wall which has a lower edge disposed above the circular path of the cutting means (2) and extends upwards and forwards in order to bend the plants before they are cut into sections by the cutting means, characterised in that the deflecting wall is formed by the semi-circular strip (13) which is in the shape of a truncated cone diverging towards the top, is fixed on the front part of the housing (5) and extends, in the direction of rotation of the cutting means, from a point (A) disposed in front of the transverse mid-plane of this housing as far as a point (B) disposed beyond the longitudinal plane (P2) of the housing in front of the ejection opening (16), in such a way that it deflects each sectioned stem to the side, taking advantage of the energy transmitted to this stem by the cutting means.

2. Housing according to Claim 1, characterised in that the front strip (13) is extended towards the rear and above the ejection opening (16) by a sloping deflector (15) which extends upwards from the housing towards the exterior.

3. Housing according to Claim 2, characterised in that the inner longitudinal edge (15a) of the deflector (15) is joined to the upper wall (5a) of the housing (5) by a straight line which cuts across the corresponding path of the cutting means (2), extends on either side of the transverse mid-plane of the housing and forms with the longitudinal axis of the plant-cutting machine an acute angle a which converges towards the front.
